# EUROPÄISCHE PATENTSCHRIFT

(11) **EP 2 730 092 B1**
(45) Veröffentlichungstag und Bekanntmachung des Hinweises auf die Patenterteilung: **19.12.2018**
(21) Anmeldenummer: 12728214.3
(22) Anmeldetag: 13.06.2012
(51) Int. Cl.: G02B 27/62, G01M 11/00, G03B 43/00, H04N 17/00

(54) **ANORDNUNG UND VERFAHREN ZUM BESTIMMEN EINER ABBILDUNGSABWEICHUNG EINER KAMERA**
SYSTEM AND METHOD FOR CAMERA CALIBRATION
SYSTÈME ET PROCÉDÉ D'ÉTALONNAGE D'UNE CAMÉRA

(30) Priorität: 05.07.2011 DE 102011078631
(43) Veröffentlichungstag der Anmeldung: 14.05.2014
(73) Patentinhaber: Robert Bosch GmbH, 70442 Stuttgart (DE)
(72) Erfinder: SCHMACK, Andreas, 71229 Leonberg (DE); APEL, Uwe, 72666 Neckartailfingen (DE)
(86) Internationale Anmeldenummer: PCT/EP2012/061144
(87) Internationale Veröffentlichungsnummer: WO 2013/004458

(56) Entgegenhaltungen:
- EP-A2- 1 394 501
- EP-A2- 2 148 501
- DE-A1-102004 056 669
- JP-A- 2001 082 941
- US-A- 5 617 257
- US-A1- 2007 280 677
- US-A1- 2009 033 926
- ZHANG: IEEE TRANSACTIONS ON PATTERN ANALYSIS AND MACHINE INTELLIGENCE, Bd. 22, Nr. 11, 1. Januar 2000 (2000-01-01), Seite 1330, XP55037019, ISSN: 0162-8828, DOI: 10.1109/34.888718

## Beschreibung

Die Erfindung betrifft eine Anordnung und ein Verfahren zum Bestimmen einer Abbildungsabweichung einer Kamera.

### Stand der Technik

In der EP 1 376 051 B1 ist eine Kalibrierung eines Bildsensorsystems an einem Kraftfahrzeug mit Kalibrierobjekt und Lagebezugssensor beschrieben. Das dort beschriebene Verfahren zur Kalibrierung eines Bildsensorsystems, das sich vorzugsweise an einem Kraftfahrzeug befindet verwendet mindestens ein Testbild, wobei das Bildsensorsystem das Testfeld aufnimmt und das aufgenommene Testfeld zur Kalibrierung verwendet wird, wobei das Testfeld Kalibrierungsbezugsmerkmale mit bekannter räumlicher geometrischer Anordnung aufweist und das Bildsensorsystem die Kalibrierungsbezugsmerkmale aufnimmt.

Die DE 199 62 997 A1 beschreibt ein Verfahren zur Kalibrierung eines Sensorsystems, mit dem eine Erfassung und Auswertung von Objekten im Kursverlauf eines Fahrzeuges durchgeführt wird. Bei dem Verfahren werden mit dem Sensorsystem charakteristische Daten der Objekte erfasst und die Daten, die unter Berücksichtigung der Eigenbewegung des Fahrzeugs als ruhende oder quasi ruhende Objekte erkannt werden, einer Kalibrierungseinheit zugeführt. In der Kalibrierungseinheit werden die Abweichungen der aktuell gemessenen Daten von Daten eines Modells der Objekte als Fehlervektor ermittelt und zur Korrektur der Daten des Modells in Richtung auf eine Minimierung der Abweichung herangezogen.

Die Druckschrift DE 198 15 106 B4 beschreibt ein Verfahren zum Messen von Kamera- und Linseneigenschaften zur Kameranachführung, wobei wenigstens ein virtuelles Objekt darin korrekt angeordnet wird relativ zu wenigstens einem wirklichen Objekt in kombinierten Bildern einer wirklichen Umgebung und einer virtuellen Umgebung umfassend die Schritte, dass die Betastungseinstellungen der Kamera und der Linse gewählt werden, dass die wirkliche Umgebung durch die Kamera und die Linse fotografiert werden und ein erstes Videosignal, das die wirkliche Umgebung repräsentiert, zu einer gemeinsamen Displayeinrichtung übertragen wird, wobei die wirkliche Umgebung mindestens eine wirkliche Skala enthält.

EP 1 394 501 A2 betrifft eine Anordnung zur Kalibrierung einer Kamera. Dabei wird die Kamera an einem Haltearm so angeordnet, dass sie auf eine Anordnung von drei zueinander orthogonal angeordneten Seitenwänden mit einem Testmuster gerichtet ist. Die Kamera fokussiert dabei auf das durch die drei Seitenwände bereitgestellte Testmuster.

US 2009/0033926 A1 offenbart einen Kalibriervorgang für eine Kamera in einem Kraftfahrzeug. Hierzu ist auf der Innenseite der Motorhaube des Kraftfahrzeugs ein Testmuster angeordnet. Während des Kalibriervorgangs wird die Motorhaube so hochgeklappt, dass sich das Testmuster im Sichtbereich der Kamera befindet.

US 5,617,257 A betrifft einen Vorsatz für ein Nachtsichtgerät, um den Fokusbereich des Nachtsichtgeräts während des operativen Betriebes zu ändern.

Fixfokus-Objektive weisen einen fixierten Fokus mit einer unveränderlichen Entfernungseinstellung auf. Es ist ein bekannter Ansatz, Kameras mit Fixfokus-Objektiven auf die sogenannte hyperfokale Entfernung zu fokussieren. Eine solche Fokussierung zeichnet sich dadurch aus, dass der Schärfentiefebereich zwischen Unendlich und der Hälfte der hyperfokalen Entfernung liegt. Die hyperfokale Entfernung errechnet sich aus der Brennweite/des in der Kamera verwendeten Objektivs, des Durchmessers des akzeptablen Unschärfekreises in der der Bildebene und der Blendenzahl. Typische Werte der hyperfokalen Entfernung für Automotive-Kameras liegen im Bereich zwischen 4 m und 11 m. Solche Abstände können in einer Prüfeinrichtung im Fertigungsumfeld nicht sinnvoll realisiert werden.

### Offenbarung der Erfindung

Die Erfindung schafft eine Anordnung und ein Verfahren zum Bestimmen einer Abbildungsabweichung einer Kamera mit den Merkmalen der unabhängigen Patentansprüche.

### Vorteile der Erfindung

Die vorliegende Erfindung gewährleistest, dass Kameras, die in Fahrerassistenzsystemen eingesetzt werden so fokussiert sind, dass der Schärfentiefebereich den für die Funktion relevanten Abstandsbereich sicher abdeckt. Die der Erfindung zugrundeliegende Idee liegt darin, dass durch ein Abbilden von Objekten sowohl in großem Abstand als auch solche in kurzer Distanz eine ausreichend gute Kalibrierung der Kamera erreicht werden kann. Dies ist auch für die auseinanderliegenden Bildbereiche in den unterschiedlichen Teilbereichen des Bildes zu verifizieren, da bedingt durch während der Fertigung und der Montage auftretenden Toleranzen und bedingt durch eine fehlerhafte Charakteristik des Objektivs, die Bildebene nicht parallel zur Oberfläche des Bildsensors ausgerichtet sein kann. Ferner ist zu berücksichtigen, dass die Kontrastübertragungsfunktion des Objektivs abhängig von der Bildhöhe ist und typischerweise von der Bildmitte zum Rand hin deutlich abnimmt.

Sowohl für die Justierung der Fokuslage im Fertigungsprozess als auch in der Endprüfung der Schärfe ermöglicht die vorliegende Erfindung ein geeignetes Testverfahren, das eine Bestimmung des erreichbaren Kontrasts bei der Abbildung von Objekten aus verschiedenen Abständen ermöglicht. Mittels der Linseneinheit kann ein Testchart, dass in einem geringerem Abstand liegt, von einer auf einen größeren Arbeitsabstand fokussierten Kamera maximal scharf abgebildet werden. Die Größe des Testcharts kann damit auf ein handhabbares Maß reduziert werden.

Der Erfindungsgedanke sieht vor, anstelle des ansonsten flachen Charts mit Testpattern, die im Bild eine Kontrastbestimmung ermöglichen, ein parzelliertes Testchart aufzubauen, das Testfelder in verschiedenen Objektabständen für die zu vermessende Kamera bereitstellt. Zielsetzung ist es dabei, die Prüfung in möglichst wenigen Schritten durchführen zu können. Der Vorteil dieses Ansatzes liegt darin, dass die bei neueren Kameras in hohem Maße vorhandene Auflösung des Bildes genutzt werden kann, um eine möglichst große Testabdeckung der Schärfeprüfung zu erreichen.

Gemäß einer vorteilhaften Weiterbildung der Erfindung ist als Abbildungsabweichung der Kamera eine Abweichung einer Tiefenschärfe und/oder einer Fokuslage der Kamera bestimmbar.

Gemäß einer weiteren vorteilhaften Weiterbildung der Anordnung ist als Abbildungsabweichung der Kamera eine Nick- und/oder eine Gier- und/oder eine Wankabweichung der Kamera bestimmbar.

Gemäß einer weiteren vorteilhaften Weiterbildung der Anordnung ist als Abbildungsabweichung ein Abbildungsfehler und/oder eine sphärische Aberration und/oder ein Astigmatismus und/oder eine Bildfeldwölbung bestimmbar.

Gemäß einer weiteren vorteilhaften Weiterbildung der Anordnung umfasst die Anordnung eine Lichtquelle, die derart ausgebildet ist, dass die Kalibriermarkierungen reflexiv, transflektiv oder transmissiv beleuchtbar sind.

Gemäß einer weiteren vorteilhaften Weiterbildung der Anordnung ist die Wellenlänge der Lichtquelle durchstimmbar.

Gemäß einer weiteren vorteilhaften Weiterbildung der Anordnung ist das Abbild der Kalibriermarkierungen durch Licht mit unterschiedlichen Wellenlängen aufnehmbar und die Abbildungsabweichung der Kamera in Abhängigkeit einer Wellenlänge bestimmbar.

Gemäß einer weiteren vorteilhaften Weiterbildung der Anordnung ist die Linseneinheit als ein optisches Bauelement mit einer variablen Brennweite ausgelegt und die Brennweite des optischen Bauelementes durch die Steuereinheit steuerbar.

Gemäß einer weiteren vorteilhaften Weiterbildung sind die Kalibriermarkierungen als Streifenmuster mit unterschiedlicher Streifenbreite und/oder als Quadrate mit unterschiedlicher Orientierung und/oder als alphanumerische Zeichen ausgebildet.

Dies ermöglicht in vorteilhafter Weise ein Identifizieren der Kalibriermarkierungen und eine vereinfachtes Auswerten des aufgenommenen Abbildes der Kalibriermarkierungen.

Gemäß einer vorteilhaften Weiterbildung des Verfahrens wird als Abbildungsabweichung der Kamera eine Nick- und/oder eine Gier- und/oder eine Wankabweichung der Kamera bestimmt.

Gemäß einer weiteren vorteilhaften Weiterbildung des Verfahrens wird als Abbildungsabweichung der Kamera ein Abbildungsfehler und/oder eine sphärische Aberration und/oder ein Astigmatismus und/oder eine Bildfeldwölbung bestimmt.

Gemäß einer weiteren vorteilhaften Weiterbildung des Verfahrens wird das Abbild der Kalibriermarkierungen durch Licht mit unterschiedlichen Wellenlängen aufgenommen und die Abbildungsabweichung der Kamera in Abhängigkeit einer Wellenlänge bestimmt. Dies ermöglicht in vorteilhafter Weise optische Abbildungsfehler der Kamera in Abhängigkeit der Wellenlänge zu bestimmen.

### Kurze Beschreibung der Zeichnungen

Ausführungsbeispiele der Erfindung sind in den Zeichnungen dargestellt und werden in der nachfolgenden Beschreibung näher erläutert.

Es zeigen:
- Fig. 1: eine schematische Darstellung einer ersten Ausführungsform der Anordnung;
- Fig. 2: eine schematische Darstellung einer zweiten Ausführungsform der Anordnung;
- Fig. 3: eine schematische Darstellung von Kalibriermarkierungen gemäß einer Ausführungsform der Erfindung; und
- Fig. 4: ein Flussdiagramm zum Darstellen einer Ausführungsform des Verfahrens.

In den Figuren der Zeichnungen sind gleiche und funktionsgleiche Elemente, Merkmale und Komponente - sofern nichts anderes ausgeführt -jeweils mit denselben Bezugszeichen versehen.

Es versteht sich, dass Komponenten und Elemente in den Zeichnungen aus Gründen der Übersichtlichkeit und Verständlichkeit nicht notwendigerweise Maßstabsgetreu zueinander wiedergegeben sind.

### Ausführungsformen der Erfindung

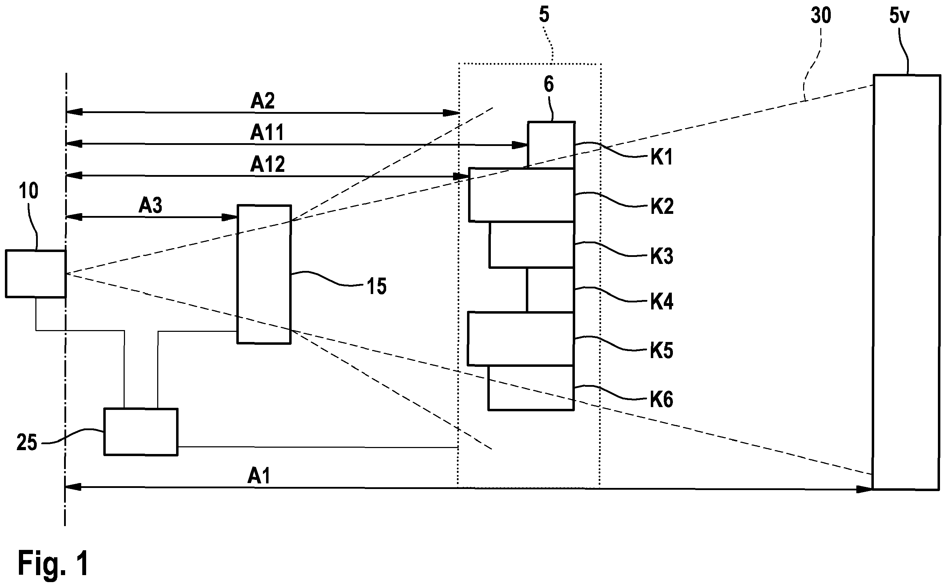

In Figur 1 sind die wesentlichen Komponenten einer Anordnung gemäß einer ersten Ausführungsform der Anordnung dargestellt.

Eine Anordnung umfasst eine Kamera 10, eine Teststruktureinheit 5, eine Linseneinheit 15 und eine Steuereinheit 25. Die Kamera 10 ist auf einen ersten Abstand A1 fokussiert. Die Teststruktureinheit 5 ist in einem zweiten Abstand A2 zur Kamera 10 in einem Sichtfeld 30 der Kamera 10 angeordnet. Beispielsweise weist die Teststruktureinheit 5 eine dreidimensionale Oberflächenstruktur 6 mit Kalibriermarkierungen K1-K6 auf. Auch wenn die beschriebene Anordnung sechs Kalibriermarkierungen aufweist, ist die Anordnung nicht auf diese Anzahl beschränkt, es können auch mehr oder weniger Kalibriermarkierungen verwendet werden.

Die Linseneinheit 15 ist beispielsweise in einem dritten Abstand A3 zur Kamera 10 zwischen der Teststruktureinheit 5 und der Kamera 10 angeordnet und erlaubt, die dreidimensionale Oberflächenstruktur 6 mit der Kamera 10 scharf abzubilden, obwohl die Kamera nicht auf die Teststruktureinheit 5 fokussiert ist, da durch die Linseneinheit 15 ein virtuelles Bild 5v der Teststruktureinheit 5 im Sichtfeld 30 der Kamera 10 erzeugt wird. Das virtuelle Bild 5v der Teststruktureinheit 5 wird dabei im Abstand A1 zur Kamera 10 erzeugt und kann daher von der auf den selben Abstand A1 fokussierten Kamera 10 abgebildet werden.

Die Steuereinheit 25 ist mit der Kamera 10 und der Linseneinheit 15 verbunden. Die Steuereinheit 25 erlaubt eine Steuerung der Kamerafunktionen der Kamera 10 und die Verarbeitung der Bilddaten. Basis der Steuereinheit 25 ist eine Rechnereinheit mit einer geeigneten Kamera-Schnittstelle für die Echtzeit-Datenübertragung. Die Steuereinheit 25 verfügt ferner beispielsweise über eine Software zur Kamerasteuerung und zur Bilddaten-Akquisition und zur Bilddaten-Verarbeitung und zur Abweichungsbestimmung.

Zur Durchführung unterschiedlicher sogenannter Through-Focus-Scans, welche ein Bestimmen der Schärfentiefe über einen bestimmten Fokusbereich umfassen, kann zur Erreichung einer vergleichbar guten Bestimmung der Schärfentiefe der Kamera 10 die jeweilige Fokuslage der Linseneinheit 15 variiert werden.

Die Linseneinheit 15 ist beispielsweise als ein optisches Bauelement mit einer variablen Brennweite ausgelegt und die Brennweite durch die Steuereinheit 25 steuerbar ist. Ferner dient die Steuereinheit 25 der Bildanalyse und der Bestimmung der Abweichungen der Kamera 10. Die von der Kamera 10 aufgenommen Abbilder werden durch die Steuereinheit 25 mittels Bilderkennungsalgorithmen analysiert.

Als Teststruktureinheit 5 können auf der dreidimensionalen Oberflächenstruktur 6 entweder die aus den USAF-Charts (auch USAF-Resolution-Test-Chart, deutsch etwa: "USAF-Auflösungstesttafel") bekannten Streifenmuster verschiedener Linienpaarbreiten oder auch schräg gestellte Quadrate entsprechend des in der ISO 12233 vorgeschlagenen Auswerteverfahrens aufgebracht sein. Die Teststruktureinheit 5 kann entweder von der Kameraseite her beleuchtet sein, also reflexiv ausgelegt sein, oder transmissiv gestaltet sein und von der Rückseite der einzelnen Kalibriermarkierungen K1-Kn aus beleucht sein.

Die Kalibriermarkierungen K1-K6 sind als Streifenmuster mit unterschiedlichen Streifenbreiten und/oder als Quadrate mit unterschiedlicher Orientierung und/oder als sonstige geometrische Formen und/oder als alphanumerische Zeichen ausgebildet. Die Kalibriermarkierungen K1-K6 werden durch die Kamera 10 abgebildet und ergeben ein Kalibriermuster, welches das Kamerabild der Kamera 10 ausfüllt.

Zur Analyse der Kalibriermarkierungen K1-K6 werden definierte Koordinatensystemen oder codierte Kalibriermarkierungen K1-K6 verwendet. Bei einer automatischen Messung kann eine Codierung der Kalibriermarkierungen K1-K6 in Form eines Binärcodes, der rund um die eigentliche Kalibriermarkierungen K1-K6 angeordnet ist, erfolgen. Durch entsprechende Bildverarbeitungsverfahren wird dann neben der Messung der Bildkoordinate einer Kalibriermarkierungen K1-K6 auch deren Identität erkannt und sofort zugewiesen.

Die Kamera 10 ist beispielsweise als eine Kamera ausgeführt, die in Fahrerassistenzsystemen eingesetzt wird. Beispielsweise ist die Kamera 10 in Fix-Fokus-Ausführung aufgebaut. Die Kamera 10 kann so fokussiert sein, dass der Schärfentiefebereiche den für die Funktion der Kamera relevanten Abstandsbereich beim Einsatz im Fahrzeug sicher abdeckt. Das heißt, dass sowohl Objekte in großem Abstand, beispielsweise 80 m - 200 m, als auch solche in kurzer Distanz, beispielsweise 3 m - 80 mit einem ausreichend guten Kontrast abgebildet werden.

Die ausreichend gute Abbildung von Kontrastverhältnissen ist auch für die auseinander liegenden Bildbereiche in den verschiedenen Ecken des von der Kamera 10 aufgenommen Abbildes zu verifizieren, da bedingt durch Toleranzen in der Montagetechnik und durch die Charakteristik des Objektivs die Bildebene nicht parallel zur Oberfläche des Bildsensors ausgerichtet sein kann.

Beispielsweise kann durch die Linseneinheit 15 die dreidimensionale Oberflächenstruktur 6 der Teststruktureinheit 5 als virtuelles Bild 5v erzeugt werden und so von der Kamera 10 abgebildet werden.

Die Linseneinheit 15 ist beispielsweise als ein optisch wirksames Bauelement mit zwei lichtbrechenden Flächen, von denen mindestens eine Fläche konvex oder konkav gewölbt ausgelegt.

Ferner kann die Linseneinheit als ein optisches Bauelement mit einer variablen Brennweite ausgelegt sein und die Brennweite des optischen Bauelementes durch die Steuereinheit 25 steuerbar sein.

Die Linseneinheit 15 kann ein virtuelles Bild der Teststruktureinheit 5 als ein optisches Abbild erzeugen, wobei die Kamera auf das virtuelle Bild 5v der Teststruktureinheit 5 im Abstand A1 fokussiert ist.

Die Teststruktureinheit 5 ist beispielsweise mit der dreidimensionalen Oberflächenstruktur 6 aufgebaut. Die dreidimensionale Oberflächenstruktur 6 weist Kalibriermarkierungen K1-K6 auf, welche in verschiedenen Objektabständen A11, A12 zur Kalibrierung der zu vermessenden Kamera 10 bereitgestellt sind.

Die Codierung der Kalibriermarkierungen K1-K6 ist beispielsweise rotationsinvariant. Dadurch spielt die Ausrichtung und Lage der Kalibriermarkierungen K1-K6 zur Erkennung keine Rolle, die Codierung ist für alle Positionen eindeutig identifizierbar.

Je nach Ausführung und Codierungstiefe (12 Bit oder 14 Bit) können unterschiedlich viele verschiedene Kalibriermarkierungen K1-K6 unterschieden werden. Für die meisten Anwendungen sind 12 Bit-Codierungen mit insgesamt bis zu 147 unterschiedlichen Nummern ausreichend. Die 14-Bit-Version erlaubt die Unterscheidung von 516 Nummern.

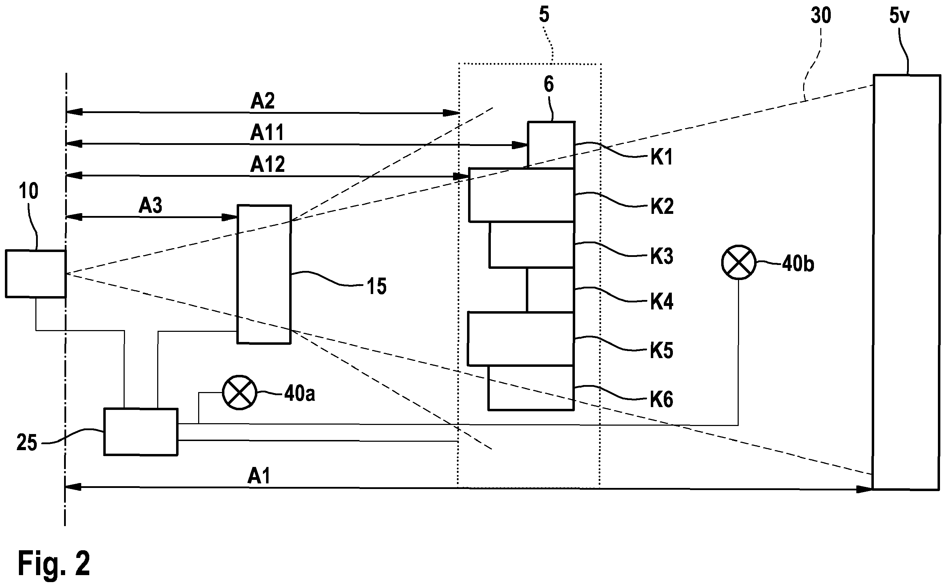

In Figur 2 sind die wesentlichen Komponenten einer Anordnung gemäß einer zweiten Ausführungsform der Anordnung dargestellt.

Zur kameraseitigen Beleuchtung der Teststruktureinheit 5 ist beispielsweise eine Lichtquelle 40a ausgebildet, welche mit der Steuereinheit 25 verbunden ist. Eine weitere Lichtquelle 40b, welche ebenfalls mit der Steuereinheit 25 verbunden ist, kann eine Beleuchtung von der Rückseite ermöglichen, wobei die einzelnen Kalibriermarkierungen K1-K6 transmissiv gestaltet sind.

Die Lichtquellen 40a, 40b sind beispielsweise als in der emittierten Wellenlänge durchstimmbare Lichtquellen ausgeführt, beispielsweise in der Form von Farbwechsel-Leuchtdioden oder von sonstigen lichtemittierenden Dioden. Durch die Steuereinheit 25 kann dabei der von den Lichtquellen 40a, 40b zu erzeugende Farbton eingestellt werden.

Weitere Bezugszeichen der Figur 2 sind bereits in der Figurenbeschreibung der Figur 1 erläutert.

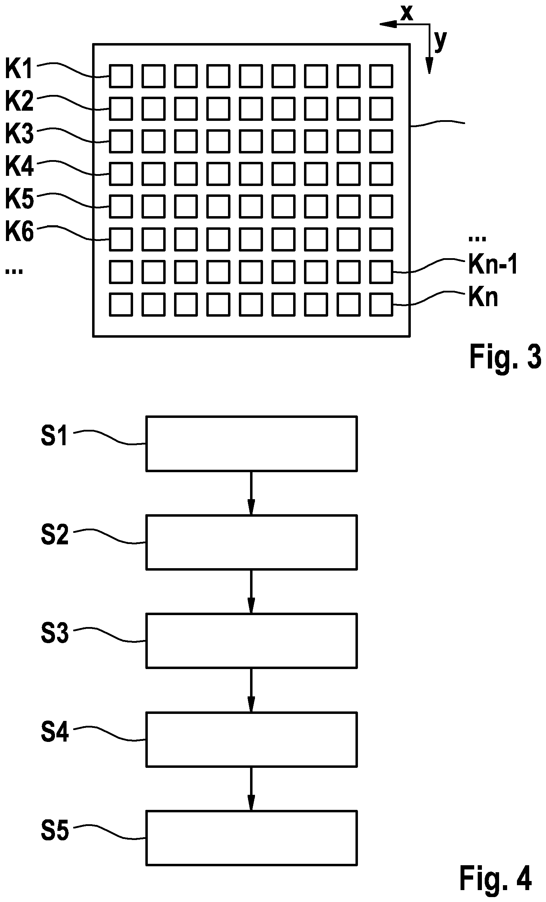

Die Figur 3 zeigt eine schematische Darstellung von Kalibriermarkierungen gemäß einer Ausführungsform der Erfindung.

Die Kalibriermarkierungen K1-Kn sind beispielsweise auf der Teststruktureinheit 5 in Form eines in y- und x-Richtung aufgespannten Feldes oder einer Matrix angeordnet und weisen mehrere unterschiedliche Objektabständen (in z-Richtung) im Bildfeld der Kamera 10 auf. Eine mögliche Aufteilung der Kalibriermarkierungen K1-Kn weist beispielsweise 5 verschiedene Objektabstände auf, welche virtuellen Abständen von 3 m, 5 m, 11 m, 200 m und Unendlich zwischen der Kamera 10 und dem virtuellem Bild 5v der Teststruktureinheit 5 entsprechen.

Durch eine symmetrische Verteilung von Testfeldern, die sowohl Objektabstände im Nah- und Fernbereich repräsentieren, kann mittels eines einzigen Testbildes auch auf die korrekte Fokuslage der Kamera 10 und auf eine parallele Ausrichtung des Bildsensors zur Bildebene geprüft werden.

Die Figur 4 zeigt ein Flussdiagramm zum Darstellen einer Ausführungsform des Verfahrens.

Das in Figur 4 wiedergegebene Verfahren ist beispielsweise mittels der oben beschriebenen Anordnung ausführbar. Die Ausführbarkeit des Verfahrens ist jedoch nicht auf die Verwendung dieser Anordnung oder eines damit ausgestatteten Kamera-Kalibiersystems limitiert.

In einem ersten Verfahrensschritt erfolgt ein Fokussieren S1 der Kamera 10 auf den ersten Abstand A1.

Beispielsweise kann in dem ersten Verfahrensschritt des Fokussierens S1 die Kamera 10 auf eine hyperfokale Entfernung fokussiert werden. Die hyperfokale Entfernung liegt vorzugsweise in einem Bereich von 25 bis 300 m.

In einem weiteren Verfahrensschritt erfolgt ein Anordnen S2 einer Teststruktureinheit 5 mit einer dreidimensionalen Oberflächenstruktur 6 mit Kalibriermarkierungen K1-Kn in einem zweiten Abstand A2 zur Kamera 10.

In einem weiteren Verfahrensschritt erfolgt ein Einsetzen S3 einer in einem dritten Abstand A3 zur Kamera 10 angeordneten Linseneinheit 15 zum Abbilden der Oberflächenstruktur durch die Kamera.

In einem weiteren Verfahrensschritt erfolgt ein Aufnehmen S4 eines Abbildes der Kalibriermarkierungen K1-Kn der dreidimensionalen Oberflächenstruktur 6 durch die Kamera 10. Vorzugsweise wird in dem Verfahrensschritt des Aufnehmens S4 das Abbild der Kalibriermarkierungen K1-Kn durch Licht mit unterschiedlichen Wellenlängen aufgenommen und die Abbildungsabweichung der Kamera 10 in Abhängigkeit einer Wellenlänge bestimmt.

In einem weiteren Verfahrensschritt wird ein Bestimmen S5 der Abbildungsabweichung der Kamera 10 durch eine Steuereinheit 25 durch Auswerten des aufgenommenen Abbildes durchgeführt. Vorzugesweise wird in dem Verfahrensschritt S5 eine Abbildungsabweichung der Kamera 10 eine Abweichung einer Tiefenschärfe und/oder einer Fokuslage der Kamera 10 bestimmt.

Ferner kann als Abbildungsabweichung auch eine Nick- und/oder eine Gier- und/oder eine Wankabweichung der Kamera 10 bestimmt werden. Ebenso kann als Abbildungsfehler eine sphärische Aberration und/oder ein Astigmatismus und/oder eine Bildfeldwölbung bestimmt werden.

Das Verfahren erlaubt die Kamera 10 oder weitere digitale Bildaufnahmesysteme zu kalibrieren oder hinsichtlich vorhandener Abweichungen zu überprüfen.

Die Bezeichnung der Verfahrensschritte S1 bis S5 legt keine zeitliche Reihenfolge zum Ausführen von diesen fest.

## Patentansprüche

1. Anordnung zum Bestimmen einer Abbildungsabweichung einer Kamera (10) mit:
- der Kamera (10), welche auf einen ersten Abstand (A1) fokussiert ist;
- einer Teststruktureinheit (5), die zum Bestimmen der Abbildungsabweichung der Kamera (10) in einem zweiten Abstand (A2) zur Kamera (10) in einem Sichtfeld (30) der Kamera (10) angeordnet ist und die eine dreidimensionale Oberflächenstruktur (6) mit Kalibriermarkierungen (K1-Kn) aufweist, wobei die Kalibriermarkierungen (K1-Kn) auf Feldern mit mehreren unterschiedlichen Abständen (A11, A12) für die Kamera angeordnet sind; und
- einer Steuereinheit (25), die mit der Kamera verbunden ist und die derart ausgebildet ist, dass die Abbildungsabweichung der Kamera (10) durch Auswerten eines aufgenommenen Abbildes der Kalibriermarkierungen (K1-Kn) der dreidimensionalen Oberflächenstruktur (6) bestimmbar ist,
**dadurch gekennzeichnet, dass**
der zweite Abstand (A2) zwischen Teststruktureinheit (5) und Kamera (10) geringer ist als der erste Abstand (A1), auf welchen die Kamera (10) fokussiert,
und wobei die Anordnung ferner eine Linseneinheit (15) umfasst, die als ein optisches Bauelement mit zwei lichtbrechenden Flächen ausgebildet ist, von denen mindestens eine Fläche konvex oder konkav gewölbt ausgebildet ist, und die Linseneinheit (15) zum Bestimmen der Abbildungsabweichung der Kamera (10) in einem dritten Abstand (A3) zur Kamera (10) und zwischen der Teststruktureinheit (5) und der Kamera (10) angeordnet ist und derart ausgebildet ist, dass die dreidimensionale Oberflächenstruktur (6) von der Kamera (10) scharf abbildbar ist,
wobei die Linseneinheit (15) als ein optisches Bauelement mit einer variablen Brennweite ausgelegt ist, und die Brennweite der Linseneinheit (15) durch die Steuereinheit (25) steuerbar ist.

2. Anordnung nach Anspruch 1, wobei als Abbildungsabweichung der Kamera (10) eine Abweichung einer Tiefenschärfe und/oder einer Fokuslage der Kamera (10) bestimmbar ist.

3. Anordnung nach einem der Ansprüche 1 oder 2, wobei als Abbildungsabweichung der Kamera (10) eine Nick- und/oder eine Gier- und/oder eine Wankabweichung der Kamera (10) bestimmbar ist.

4. Anordnung nach einem der vorhergehenden Ansprüche, wobei als Abbildungsabweichung der Kamera (10) ein Abbildungsfehler und/oder eine sphärische Aberration und/oder ein Astigmatismus und/oder eine Bildfeldwölbung bestimmbar ist.

5. Anordnung nach einem der vorhergehenden Ansprüche, wobei die Anordnung eine Lichtquelle umfasst, die derart ausgebildet ist, dass die Kalibriermarkierungen (K1-Kn) reflexiv, transflektiv oder transmissiv beleuchtbar sind.

6. Anordnung nach Anspruch 5, wobei die Lichtquelle in der Wellenlänge durchstimmbar ist.

7. Anordnung nach einem der vorhergehenden Ansprüche, wobei das Abbild der Kalibriermarkierungen (K1-Kn) durch Licht mit unterschiedlichen Wellenlängen aufnehmbar ist und die Abbildungsabweichung der Kamera (10) in Abhängigkeit einer Wellenlänge bestimmbar ist.

8. Anordnung nach einem der vorhergehenden Ansprüche, wobei die Kalibriermarkierungen (K1-Kn) als Streifenmuster mit unterschiedlichen Streifenbreiten und/oder als Quadrate mit unterschiedlicher Orientierung und/oder als alphanumerische Zeichen ausgebildet sind.

9. Verfahren zum Bestimmen einer Abbildungsabweichung einer Kamera (10) mit den Schritten:
- Fokussieren (S1) einer Kamera (10) auf einen ersten Abstand (A1);
- Anordnen (S2) einer Teststruktureinheit (5) mit einer dreidimensionalen Oberflächenstruktur (6) mit Kalibriermarkierungen (K1-Kn) in einem zweiten Abstand (A2) zur Kamera (10), wobei der zweite Abstand (A2) zwischen der Teststruktureinheit (5) und Kamera (10) geringer ist als der erste Abstand (A1), auf welchen die Kamera (10) fokussiert, und wobei die Kalibriermarkierungen (K1-Kn) auf Feldern mit mehreren unterschiedlichen Abständen (A11, A12) für die Kamera angeordnet sind;
- Einsetzen (S3) einer in einem dritten Abstand (A3) zur Kamera (10) angeordneten Linseneinheit (15) zum Abbilden der dreidimensionalen Oberflächenstruktur (6) durch die Kamera (10), wobei die Linseneinheit (15) als ein optisches Bauelement mit zwei lichtbrechenden Flächen ausgebildet ist, von denen mindestens eine Fläche konvex oder konkav gewölbt ausgebildet ist, wobei die Linseneinheit (15) als ein optisches Bauelement mit einer variablen Brennweite ausgelegt ist, und die Brennweite der Linseneinheit (15) durch eine Steuereinheit (25) steuerbar ist;
- Aufnehmen (S4) eines Abbildes der Kalibriermarkierungen (K1-Kn) der dreidimensionalen Oberflächenstruktur (6) durch die Kamera (10); und
- Bestimmen (S5) der Abbildungsabweichung der Kamera durch die Steuereinheit (25) durch Auswerten des aufgenommenen Abbildes.

10. Verfahren nach Anspruch 9, wobei als Abbildungsabweichung der Kamera (10) eine Abweichung einer Tiefenschärfe und/oder einer Fokuslage der Kamera (10) bestimmt wird.

11. Verfahren nach einem der Ansprüche 9 oder 10, wobei als Abbildungsabweichung der Kamera (10) eine Nick- und/oder eine Gier- und/oder eine Wankabweichung der Kamera (10) bestimmt wird.

12. Verfahren nach einem der Ansprüche 9 bis 11, wobei als Abbildungsabweichung der Kamera (10) ein Abbildungsfehler und/oder eine sphärische Aberration und/oder ein Astigmatismus und/oder eine Bildfeldwölbung bestimmt wird.

13. Verfahren nach einem der Ansprüche 9 bis 12, wobei das Abbild der Kalibriermarkierungen (K1-Kn) durch Licht mit unterschiedlichen Wellenlängen aufgenommen wird und die Abbildungsabweichung der Kamera (10) in Abhängigkeit einer Wellenlänge bestimmt wird.

## Claims

1. Arrangement for determining an imaging deviation of a camera (10), comprising:
- the camera (10), which is focussed on a first distance (A1);
- a test structure unit (5), which is arranged at a second distance (A2) from the camera (10) in a field of view (30) of the camera (10) for the purposes of determining the imaging deviation of the camera (10) and which has a three-dimensional surface structure (6) with calibration marks (K1-Kn), wherein the calibration marks (K1-Kn) are arranged on fields with a plurality of different distances (A11, A12) for the camera; and
- a control unit (25), which is connected to the camera and which is embodied in such a way that the imaging deviation of the camera (10) is determinable by evaluating a recorded image of the calibration marks (K1-Kn) of the three-dimensional surface structure (6),
**characterized in that**
the second distance (A2) between test structure unit (5) and camera (10) is less than the first distance (A1) on which the camera (10) is focussed,
and wherein the arrangement further comprises a lens unit (15), which is embodied as an optical component with two light-refractive surfaces, of which at least one surface has a convexly or concavely arcuate embodiment, and the lens unit (15) is arranged at a third distance (A3) from the camera (10) and between the test structure unit (5) and the camera (10) for the purposes of determining the imaging deviation of the camera (10) and embodied in such a way that the three-dimensional surface structure (6) is able to be imaged in focus by the camera (10),
wherein the lens unit (15) is designed as an optical component with a variable focal length and the focal length of the lens unit (15) is controllable by the control unit (25).

2. Arrangement according to Claim 1, wherein a deviation of a depth of field and/or of a focal position of the camera (10) is determinable as an imaging deviation of the camera (10).

3. Arrangement according to either of Claims 1 and 2, wherein a nick and/or a yaw and/or a roll deviation of the camera (10) is determinable as an imaging deviation of the camera (10).

4. Arrangement according to any one of the preceding claims, wherein an imaging aberration and/or spherical aberration and/or astigmatism and/or a field curvature is determinable as an imaging deviation of the camera (10).

5. Arrangement according to any one of the preceding claims, wherein the arrangement comprises a light source, which is embodied in such a way that the calibration marks (K1-Kn) are illuminable in reflective, transflective or transmissive fashion.

6. Arrangement according to Claim 5, wherein the light source is tunable in terms of wavelength.

7. Arrangement according to any one of the preceding claims, wherein the image of the calibration marks (K1-Kn) is recordable by light with different wavelengths and the imaging deviation of the camera (10) is determinable as a function of the wavelength.

8. Arrangement according to any one of the preceding claims, wherein the calibration marks (K1-Kn) are embodied as a stripe pattern with different stripe widths and/or as squares with different orientations and/or as alphanumerical characters.

9. Method for determining an imaging deviation of the camera (10), including the steps of:
- focusing (S1) a camera (10) on a first distance (A1) ;
- arranging (S2) a test structure unit (5) with a three-dimensional surface structure (6) with calibration marks (K1-Kn) at a second distance (A2) from the camera (10), wherein the second distance (A2) between the test structure unit (5) and camera (10) is less than the first distance (A1), on which the camera (10) is focussed, and wherein the calibration marks (K1-Kn) are arranged on fields with a plurality of different distances (A11, A12) for the camera;
- inserting (S3) a lens unit (15), which is arranged at a third distance (A3) from the camera (10), for the purposes of imaging the three-dimensional surface structure (6) by the camera (10), wherein the lens unit (15) is embodied as an optical component with two light-refractive surfaces, of which at least one surface has a convexly or concavely arcuate embodiment, wherein the lens unit (15) is designed as an optical component with a variable focal length and the focal length of the lens unit (15) is controllable by a control unit (25);
- recording (S4) an image of the calibration marks (K1-Kn) of the three-dimensional surface structure (6) by the camera (10); and
- determining (S5) the imaging deviation of the camera by the control unit (25) by way of evaluating the recorded image.

10. Method according to Claim 9, wherein a deviation of the depth of field and/or of the focal position of the camera (10) is determined as an imaging deviation of the camera (10).

11. Method according to either of Claims 9 and 10, wherein a nick and/or a yaw and/or a roll deviation of the camera (10) is determined as an imaging deviation of the camera (10).

12. Method according to any one of Claims 9 to 11, wherein an imaging aberration and/or spherical aberration and/or astigmatism and/or a field curvature is determined as an imaging deviation of the camera (10).

13. Method according to any one of Claims 9 to 12, wherein the image of the calibration marks (K1-Kn) is recorded by light with different wavelengths and the imaging deviation of the camera (10) is determined as a function of the wavelength.

## Revendications

1. système destiné à déterminer un écart de formation d'image d'une caméra (10) comportant :
- la caméra (10), dont la mise au point est effectuée à une première distance (A1) ;
- une unité de structure de test (5) qui est disposée à une deuxième distance (A2) de la caméra (10) dans un champ de vision (30) de la caméra (10) pour déterminer l'écart de formation d'image de la caméra (10) et qui présente une structure superficielle tridimensionnelle (6) munie de repères d'étalonnage (K1-Kn), dans lequel les repères d'étalonnage (K1-Kn) sont disposés sur des champs présentant plusieurs distances différentes (A11, A12) pour la caméra ; et
- une unité de commande (25) qui est reliée à la caméra et qui est réalisée de manière à ce que l'écart de formation d'image de la caméra (10) puisse être déterminé en évaluant une image enregistrée des repères d'étalonnage (K1-Kn) de la structure superficielle tridimensionnelle (6),
**caractérisé en ce que**
la deuxième distance (A2) entre l'unité de structure de test (5) et la caméra (10) est inférieure à la première distance (A1) sur laquelle la caméra (10) est mise au point,
et dans lequel le système comprend en outre une unité d'objectif (15) réalisée sous la forme d'un composant optique ayant deux surfaces de réfraction, dont au moins une surface est incurvée de manière convexe ou concave et dans lequel l'unité d'objectif (15) est disposée à une troisième distance (A3) de la caméra (10) pour déterminer l'écart de formation d'image de la caméra (10) et entre l'unité de structure de test (5) et la caméra (10) et est réalisée de manière à ce qu'une image de la structure superficielle tridimensionnelle (6) de la caméra (10) puisse être formée de manière nette,
dans lequel l'unité d'objectif (15) est configurée en tant que composant optique à distance focale variable et la distance focale de l'unité d'objectif (15) peut être commandée par l'unité de commande (25).

2. Système selon la revendication 1, dans lequel un écart d'une profondeur de champ et/ou d'une position de mise au point de la caméra (10) peut être déterminé en tant qu'écart de formation d'image de la caméra (10).

3. Système selon l'une des revendications 1 ou 2, dans lequel un écart de tangage et/ou de lacet et/ou de roulis de la caméra (10) peut être déterminé en tant qu'écart de formation d'image de la caméra (10).

4. Système selon l'une des revendications précédentes, dans lequel une erreur de formation d'image et/ou une aberration sphérique et/ou un astigmatisme et/ou une courbure du champ d'image peuvent être déterminés en tant qu'écart de formation d'image de la caméra (10).

5. Système selon l'une des revendications précédentes, dans lequel le système comprend une source lumineuse réalisée de manière à ce que les repères d'étalonnage (K1-Kn) soient réfléchissants, transflectifs ou puissent être éclairés en transmission.

6. Système selon la revendication 5, dans lequel la longueur d'onde de la source lumineuse est accordable.

7. Système selon l'une des revendications précédentes, dans lequel l'image des repères d'étalonnage (K1-Kn) peut être enregistrée au moyen d'une lumière ayant des longueurs d'onde différentes et l'écart de formation d'image de la caméra (10) peut être déterminé en fonction d'une longueur d'onde.

8. Système selon l'une des revendications précédentes, dans lequel les repères d'étalonnage (K1-Kn) sont réalisés sous la forme d'un motif de bandes présentant différentes largeurs de bandes et/ou de carrés présentant différentes orientations et/ou de caractères alphanumériques.

9. Procédé destiné à déterminer un écart de formation d'image d'une caméra (10), comprenant les étapes consistant à :
- effectuer la mise au point (S1) d'une caméra (10) à une première distance (A1) ;
- disposer (S2) une unité de structure de test (5) présentant une structure superficielle tridimensionnelle (6) munie de repères d'étalonnage (K1-Kn) à une deuxième distance (A2) de la caméra (10), dans lequel la deuxième distance (A2) entre l'unité de structure de test (5) et la caméra (10) est inférieure à la première distance (A1) sur laquelle la caméra (10) est mise au point, et dans lequel les repères d'étalonnage (K1-Kn) sont disposés sur des champs présentant plusieurs distances différentes (A11, A12) pour la caméra ;
- insérer (S3) une unité d'objectif (15) disposée à une troisième distance (A3) de la caméra (10) pour former une image de la structure superficielle tridimensionnelle (6) de la caméra (10), dans lequel l'unité d'objectif (15) est réalisée sous la forme d'un composant optique ayant deux surfaces de réfraction, dont au moins une surface est incurvée de manière convexe ou concave, dans lequel l'unité d'objectif (15) est configurée en tant que composant optique présentant une distance focale variable et la distance focale de l'unité d'objectif (15) peut être commandée par une unité de commande (25) ;
- enregistrer (S4) une image des repères d'étalonnage (K1-Kn) de la structure superficielle tridimensionnelle (6) au moyen de la caméra (10) ; et
- déterminer (S5) l'écart de formation d'image de la caméra au moyen de l'unité de commande (25) en évaluant l'image enregistrée.

10. Procédé selon la revendication 9, dans lequel un écart d'une profondeur de champ et/ou d'une position de mise au point de la caméra (10) est déterminé en tant qu'écart de formation d'image de la caméra (10).

11. Procédé selon l'une des revendications 9 ou 10, dans lequel un écart de tangage et/ou de lacet et/ou de roulis de la caméra (10) est déterminé en tant qu'écart de formation d'image de la caméra (10).

12. Procédé selon l'une des revendications 9 à 11, dans lequel une erreur de formation d'image et/ou une aberration sphérique et/ou un astigmatisme et/ou une courbure du champ d'image sont déterminés en tant qu'écart de formation d'image de la caméra (10).

13. Procédé selon l'une des revendications 9 à 12, dans lequel l'image des repères d'étalonnage (K1-Kn) est enregistrée au moyen d'une lumière ayant des longueurs d'onde différentes et l'écart de formation d'image de la caméra (10) est déterminé en fonction d'une longueur d'onde.
